# EUROPÄISCHE PATENTSCHRIFT

(11) **EP 0 798 521 B1**
(45) Veröffentlichungstag und Bekanntmachung des Hinweises auf die Patenterteilung: **29.06.2005**
(21) Anmeldenummer: 97101682.9
(22) Anmeldetag: 04.02.1997
(51) Int. Cl.: F25D 29/00, F25D 11/02

(54) **Temperaturregelung für ein Kühlgerät**
Temperature control for refrigeration apparatus
Commande de température pour appareil frigorofique

(30) Priorität: 29.03.1996 DE 19612594
(43) Veröffentlichungstag der Anmeldung: 01.10.1997
(73) Patentinhaber: AEG Hausgeräte GmbH, 90429 Nürnberg (DE)
(72) Erfinder: Jürgensen, Heinz, Dr.-Ing., 34253 Lohfelden (DE); Dommaschk, Siegmar, Dipl.-Ing., 34621 Frielendorf (DE); Krug, Günter, Dipl.-Ing., 34302 Guxhagen (DE)

(56) Entgegenhaltungen:
- EP-A- 0 045 728
- EP-A- 0 686 818
- EP-A- 0 727 628
- US-A- 4 292 813
- US-A- 4 513 581

## Beschreibung

Die Erfindung betrifft ein Verfahren zur Regelung der Temperatur in einem Kühlgerät mit einem einzigen Kühlaggregat und einem einzigen Kühlkreislauf, der eine Hauptkühlzone mit einer höheren Hauptkühltemperatur und eine Tiefkühlzone mit einer niedrigeren Tiefkühltemperatur nach Art einer Reihenschaltung miteinander verbindet, und einem Mittel zur Konstanthaltung der Hauptkühltemperatur.

Ebenso betrifft die Erfindung eine Regeleinrichtung zur Regelung der Temperatur in einem Kühlgerät und das Kühlgerät selber. Die Regeleinrichtung findet Einsatz in einem Kühlgerät mit mehreren Kühlzonen.

Aus der EP 0 045 728 A2 ist eine Vorrichtung zur Temperaturregelung für ein Kühlgerät bekannt, das ein einziges Kühlaggregat und einen einzigen Kühlkreislauf aufweist. Der Kühlkreislauf verbindet eine Hauptkühlzone mit einer höheren Hauptkühltemperatur und eine Tiefkühlzone mit einer niedrigeren Tiefkühltemperatur nach Art einer Reihenschaltung miteinander. Ein Thermostat bildet ein Mittel zur Konstanthaltung der Hauptkühltemperatur, wobei das Einschalten und Ausschalten des Kühlaggregats in Abhängigkeit einer Sollwertabweichung der Tiefkühltemperatur und der Hauptkühltemperatur gesteuert wird.

In der US 4 292 813 wird ein Verfahren zur Temperaturregelung für ein Kühlgerät beschrieben, bei dem die Einschaltdauer und die Ausschaltdauer des Kühlaggregats in Abhängigkeit von der vorherigen Einschaltdauer und Ausschaltdauer variiert werden.

Bei Kühlgeräten der vorbezeichneten Art tritt das Problem auf, daß abhängig von den jeweiligen Störgrößen, etwa wechselnde Umgebungstemperaturen oder Beschickung mit warmem Kühlgut, die Tiefkühltemperatur sich praktisch unkontrolliert verändert. Bei hohen Umgebungstemperaturen ist aufgrund der hohen Temperaturdifferenz zwischen Umgebung und Innenraum des Kühlgeräts der Wärmeeintrag entsprechend hoch. Dementsprechend groß muß die Kühlleistung des Kühlaggregats sein. Die Folge für ein Tiefkühlfach mit seiner im Vergleich zum Hauptkühlfach größeren Kühlfläche bzw. Kühlschlangendichte ist, daß sich das Tiefkühlfach stärker abkühlt, als dies für den vorgesehenen Zweck notwendig wäre. Diese Überkühlung des Tiefkühlfaches ist nicht nur unnötig im Hinblick auf die Lagerung von Lebensmitteln, sondern bedeutet auch einen unnötigen Energieverbrauch. Bei herkömmlichen Kühlgeräten wird z. T. versucht, eine derartige Überkühlung durch eine entsprechende Verteilung des Kühlmittelstromes bzw. der Kühlleistung auf die verschiedenen Temperaturzonen unter Einsatz von Magnetventilen zu verhindern. Nachteilig bei dieser Lösung ist der zusätzliche geräte- und steuerungstechnische Aufwand, der die Geräte verteuert. Außerdem muß zusätzlicher Einbauraum für entsprechende Bauteile vorgesehen werden.

Im Falle von niedrigen Umgebungstemperaturen ist nur eine entsprechend geringe Kühlleistung erforderlich, da die Temperaturdifferenz zwischen den Hauptkühlfach und der Umgebung gering und dementsprechend der Wärmedurchgang durch die Kühlgerätewände verringert ist. Bedingt durch die langen Stillstandsphasen des Kühlaggregates erwärmt sich das Tiefkühlfach durch Aufnahme von Wärme aus dem Hauptkühlfach und aus der Umgebung. Eine herkömmliche Abhilfe besteht darin, im Hauptkühlfach eine Heizung vorzusehen, die in der vorbeschriebenen Situation zugeschaltet wird. Neben dem zusätzlichen geräte- und montagetechnischen Aufwand ist bei dieser Vorgehensweise vor allen Dingen der erhöhte Energieverbrauch von Nachteil.

Beim Betrieb von Kühlgeräten der in Rede stehenden Art kann es auch vorkommen, daß beide Kühlfächer zu warm sind. Ein solcher Fall kann etwa eintreten, wenn in Folge niedriger Umgebungstemperaturen das Kühlaggregat mit geringer Einschaltfrequenz arbeitet und das Hauptkühlfach und gegebenenfalls zusätzlich das Tiefkühlfach mit warmem Tiefkühlgut beschickt werden. Bei herkömmlichen Kühlgeräten wird in diesen Fällen das Kühlaggregat ohne Rücksichtnahme auf die Temperaturentwicklung im Tiefkühlfach oder auf eine Einsparung von Energie in Gang gesetzt. Schließlich können auch beide Kühlfächer eine zu niedrige Temperatur aufweisen, wie weiter unten noch erläutert wird.

Davon ausgehend ist es die Aufgabe der Erfindung, eine Temperaturregelung für ein Kühlgerät anzugeben, bei dem die genannten Nachteile umgangen sind, und das insbesondere einen ökonomischen Betrieb gestattet.

Die Lösung dieser Aufgabe besteht erfindungsgemäß darin, daß die Zyklusdauer und/oder die relative Einschaltdauer des Kühlaggregates in Abhängigkeit einer Sollwertabweichung der Hauptkühltemperatur und/oder der Tiefkühltemperatur variierbar sind. Durch diese Maßnahme ist die Temperaturregelung eines Kühlgerätes allgemein variabler und dadurch besser an die unterschiedlichen Störeinflüsse anpaßbar. So ist eine Verkürzung der Zyklusdauer dann von Vorteil, wenn die Tiefkühltemperatur zu niedrig ist und die Hauptkühltemperatur im Sollwertbereich liegt oder höher als die obere Grenze des Sollwertbereichs ist. Ein solcher Fall kann, wie oben geschildert, dann eintreten, wenn hohe Umgebungstemperaturen herrschen. Erfindungsgemäß wird bei einer solchen Konstellation die Zyklusdauer des Kühlaggregats verkürzt. Die relative Einschaltdauer, die etwa auf einen mittleren Wert eingestellt ist, bleibt dabei zunächst unverändert. Umgekehrt sorgt die erfindungsgemäße Regelung dafür, daß im Falle einer zu hohen Tiefkühltemperatur und bei einer im Sollwertbereich oder darunter liegenden Hauptkühltempertur die Zyklusdauer verlängert wird. Die mit dieser Verfahrensweise und ebenso mit einer Verkürzung oder Verlängerung der relativen Einschaltdauer verbundenen Temperaturausgleichs- und Energieeinspareffekte werden im folgenden anhand einer Zeichnung näher erläutert.

Es zeigen:
- Fig. 1: eine schematische, das Regelverhalten der erfindungsgemäßen Regelung am Beispiel eines Kühlschrankes mit Hauptkühl- und Tiefkühlfach darstellende Skizze, und
- Fig. 2: ein typisches Schaltdiagramm eines Kühlaggregats.

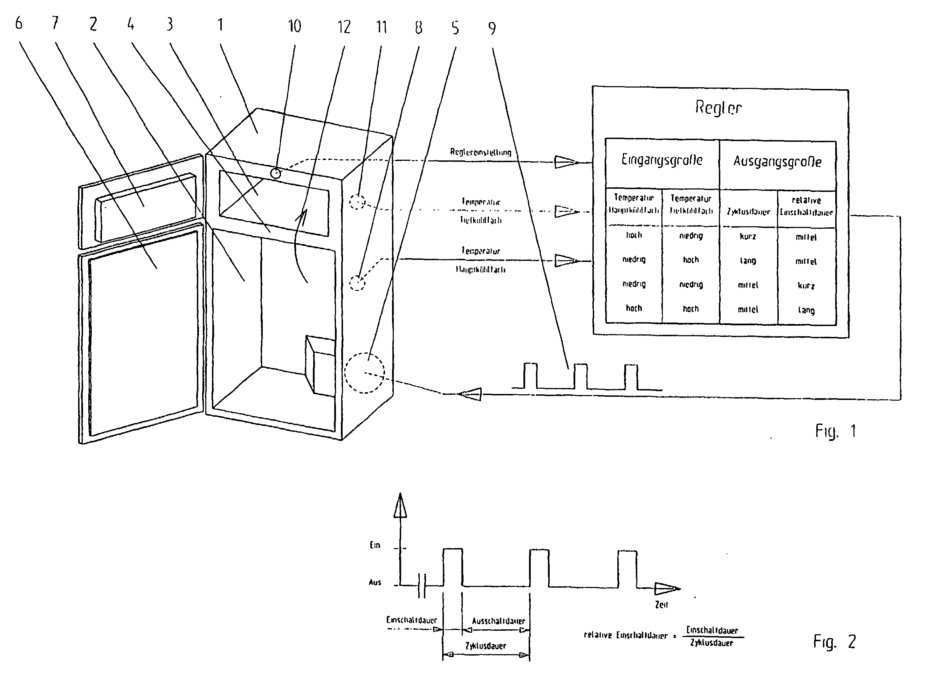

Der in Fig. 1 dargestellte Kühlschrank ist in herkömmlicher Weise aufgebaut. Er umfaßt ein Gehäuse 1 und darin angeordnet ein größeres Hauptkühlfach 2 und über diesem, durch eine Trennwand 4 abgetrennt, ein kleineres Tiefkühlfach 3. Als Kühlaggregat dient ein Kompressor 5. Hauptkühlfach 2 und Tiefkühlfach 3 sind durch seperate Türen 6 und 7 verschließbar. Die beiden Kühlfächer 2, 3 sind nach Art einer Reihenschaltung miteinander verbunden, d.h. es ist nur ein einziger Kühlkreislauf vorhanden. Die höhere Kühlleistung im Tiefkühlfach wird durch eine größere Anzahl von Kühlschlangen bzw. durch eine größere Kühlfläche erzielt. Wie bei Kühlgeräten der in Rede stehenden Art üblich, wird im Wesentlichen die Temperatur des Hauptkühlfaches 2, nämlich die Hauptkühltemperatur, konstant gehalten. Zu diesem Zweck wird die Hauptkühlfachtemperatur mit wenigstens einem Temperaturfühler 8 abgegriffen, der Meßwert an einen Regler weitergegeben und mit einem über einen Sollwerteinsteller 10 vorwählbaren Sollwert verglichen. Das Ausgangssignal 9 des Reglers schaltet je nach Abweichung der Ist- von der Solltemperatur im Hauptkühlfach 2 den Kompressor 5 ein oder aus. Die Länge einer Zyklusdauer des Kompressors setzt sich zusammen aus dessen Einschaltdauer und dessen Ausschaltdauer (siehe Fig. 2), wobei die Tiefkühltemperatur auf einen einstellbaren Sollwert, vorzugsweise minus 18° C, liegen soll. Es kann darüberhinaus vorgesehen sein, die Tiefkühltemperatur über ein Potentiometer regelbar zu gestalten.

Die Temperatur im Tiefkühlfach wird durch einem Temperaturfühler 11 abgegriffen und an den Regler weitergegeben. Die Tiefkühltemperatur soll etwa bei - 18 °C liegen. Bei einer Abweichung der Ist-Tiefkühltemperatur von diesem Wert nach oben oder unten wird das Ausgangssignal 9 des Reglers derart modifiziert, daß sich die Zyklusdauer des Kompressors und/oder dessen relative Einschaltdauer, ändert.

Die Arbeitsweise einer erfindungsgemäßen Regelung wird zunächst anhand einer Fallsituation erläutert, bei der im Tiefkühlfach 3 eine niedrigere Temperatur als - 18°C herrscht. Wenn die Außentemperaturen relativ hoch sind, ist die durch die Gehäusewände in das Hauptkühlfach 2 eindringende Wärmemenge entsprechend erhöht. Dementsprechend häufig schaltet sich der Kompressor 5 zu, um das Hauptkühlfach 2 auf seiner mittleren Soll-Hauptkühltemperatur zu halten. Diese erhöhte Kühlleistung führt dazu, daß die Tiefkühltemperatur aufgrund der größeren Kühlfläche im Tiefkühlfach 3 stärker absinkt als nötig. Die Situation wird noch ungünstiger, wenn das Hauptkühlfach 2 mit einer größeren Menge warmen Kühlguts, wie dies im Sommer häufig der Fall ist, beschickt wird. Das neu hinzugekommene Kühlgut gibt seine Wärme nur langsam ab. D.h. das Hauptkühlfach 2 erwärmt sich in jeder Ausschaltphase des Kompressors 5 wieder. Dies wiederholt sich solange, bis es auf die Soll-Hauptkühltemperatur heruntergekühlt ist. Erfindungsgemäß wird nun in solchen Fällen die Zyklusdauer des Kompressors 5 verkürzt. Das Ausmaß der Verkürzung hängt von den jeweiligen Temperaturverhältnissen, insbesondere vom Ausmaß der Tiefkühlfachunterkühlung ab. Die Verkürzung der Zyklusdauer wird durch eine Verringerung der Einschaltdauer und der Ausschaltdauer des Kompressors bei gleicher prozentualer Einschaltdauer 5 erreicht. Eine Verringerung der Zyklusdauer bedeutet, daß die Einschalt- und die Ausschaltdauer gleichermaßen verringert werden bei gleicher prozentualer Einschaltdauer. Der erfindungsgemäßen Maßnahme, nämlich die Zyklusdauer zu verkürzen, liegt die Überlegung zugrunde, daß die beiden Fächer und deren Verdampferteile unterschiedliche thermische Trägheit haben. Durch ein Verlängern oder Verkürzen der Zyklusdauer läßt sich das Tiefkühlfach 3 nur gering, aber das Hauptkühlfach 2 demgegenüber stärker beeinfluen. Ist beispielsweise die Temperatur des Tiefkühlfachs zu kalt, führt eine Verringerung der Zykluszeit dazu, daß das Tiefkühlfach 3 und das Hauptkühlfach 2 zu kalt sind, was aber durch eine Verkürzung der Einschaltdauer aufgehoben wird.

Der umgekehrte Fall, daß das Tiefkühlfach 3 zu warm ist, tritt beispielsweise bei niedrigen Umgebungstemperaturen ein. Der Wärmeeintrag über die Gehäusewände ist dabei so gering, daß der Kompressor 5 nur selten zugeschaltet werden muß. Die Folge dieser geringen Kühlleistung ist eine zwangsweise Erwärmung des Tiefkühlfaches 3. In diesem Falle wird die Zyklusdauer durch den Regler verlängert. Dies führt zu einer Erwärmung des Hauptkühlfachs 2, so daß beide Fächer 2, 3 zu warm sind. Zur Aufhebung der unerwünschten Temperaturerhöhung beider Fächer 2, 3 wird entsprechend die relative Einschaltdauer bei gleichbleibender Zyklusdauer erhöht. Die Verlängerung der Zyklusdauer wird durch eine Verlängerung der Ein- und Ausschaltdauer bei gleicher prozentualer Einschaltdauer des Kompressors 5 erreicht.

Eine weitere mögliche Fallkonstellation ist, daß beide Kühlfächer zu warm sind. Dies könnte etwa dann eintreten, wenn bei niedrigen Umgebungstemperaturen das Tiefkühlfach aus den oben erläuterten Gründen zu warm ist und das Hauptkühlfach mit Kühlgut beschickt wird. In dieser Situation ist zwar ebenfalls der Wärmeübertritt 12 unerwünscht, da sich dadurch das Tiefkühlfach weiter erwärmen würde. Die erfindungsgemäß vorgeschlagene Abhilfe besteht hier - wie vorstehend beschrieben - darin, die relative Einschaltdauer vorzugsweise bei praktisch unveränderter Zyklusdauer zu verlängern.

Die Einschaltphase des Kompressors ist dadurch entsprechend verlängert. Die während einer Zyklusdauer erbrachte Kühlleistung ist daher erhöht, wodurch eine schnelle Abkühlung auf die entsprechenden Sollwerte erreicht wird. Außerdem ist die Ausschaltdauer verkürzt, was einem Wärmeübertritt 12 entgegenwirkt, wobei dieser Wärmeübertritt jedoch grundsätzlich nur von untergeordneter Rolle ist.

Durch Überschwingeffekte oder nach dem Hochstellen des Sollwerteinstellers 10 von niedrigen auf höhere Werte kann es vorkommen, daß die Hauptkühltemperatur und die Tiefkühltemperatur zu niedrig sind. In diesem Fall bleibt naturgemäß der Kompressor 5 zunächst ausgeschaltet, bis sich das Hauptkühlfach 2 auf die Einschalttemperatur erwärmt hat. Der Kompressor wird nun eingeschaltet, läuft aber mit einer verkürzten relativen Einschaltdauer, d.h. mit verringerter Kühlleistung. Die Verkürzung der relativen Einschaltdauer wird direkt vom Regler eingestellt. Das Abkühlen erfolgt somit nicht so rasch, als dies bei unveränderter Kühlleistung der Fall wäre. Eine Übersteuerung hin zu tieferen Temperaturen als die Soll-Hauptkühltemperatur ist dadurch verhindert. Die Reaktion auf eine Temperaturabweichung erfolgt hier, wie auch im Falle der Verlängerung der relativen Einschaltdauer, nicht nur nach dem "Alles-oder-Nichts-Prinzip" (Ein-Aus), sondern es wird, je nachdem ob die Hauptkühltemperatur vorher zu hoch oder zu niedrig war, eine entsprechende Anpassung der Kühlleistung des Kompressors 5 vorgenommen.

Die Verkürzung der relativen Einschaltdauer durch den Regler erfolgt dadurch, das dieser einen niedrigeren Wert der Ist-Tiefkühl- und/oder der Hauptkühltemperatur einstellt, d. h., einen virtuellen Wert der Ist-Tiefkühl- und/oder der Hauptkühltemperatur; und die Verlängerung der relativen Einschaltdauer durch den Regler erfolgt dadurch, dass dieser einen höheren Wert der Ist-Tiefkühl- und/oder Hauptkühltemperatur, d. h., einen virtuellen Wert der Ist-Tiefkühl- und/oder Hauptkühltemperatur, einstellt. Der Regler ist beispielsweise ein Fuzzy-Regler.

## Patentansprüche

1. Verfahren zur Regelung der Temperatur in einem Kühlgerät mit
- einem einzigen Kühlaggregat und einem einzigen Kühlkreislauf, der eine Hauptkühlzone mit einer höheren Hauptkühltemperatur und eine Tiefkühlzone mit einer niedrigeren Tiefkühltemperatur nach Art einer Reihenschaltung miteinander verbindet, und
- einem Mittel zur Konstanthaltung der Hauptkühltemperatur,
**dadurch gekennzeichnet, dass** die Zyklusdauer und die relative Einschaltdauer des Kühlaggregats im wesentlichen voneinander unabhängig in Abhängigkeit einer Sollwertabweichung der Tiefkühltemperatur und/oder der Hauptkühltemperatur variiert werden.

2. Verfahren nach Anspruch 1, **dadurch gekennzeichnet, dass** die Zyklusdauer des Kühlaggregats verkürzt wird, wenn die Tiefkühltemperatur eine Istwertabweichung zu einer niedrigeren Tiefkühltemperatur aufweist und die Hauptkühltemperatur im Sollwertbereich liegt oder darüber liegt.

3. Verfahren nach Anspruch 1, **dadurch gekennzeichnet, dass** die Zyklusdauer des Kühlaggregats verlängert wird, wenn die Tiefkühlkühltemperatur eine Istwertabweichung zu einer höheren Tiefkühltemperatur aufweist und die Hauptkühltemperatur im Sollwertbereich liegt oder darunter liegt.

4. Verfahren nach Anspruch 2 oder 3, **dadurch gekennzeichnet**, das die Verlängerung der Zyklusdauer durch eine Vergrößerung und deren Verkürzung durch eine Verringerung der Ein- und Ausschaltdauer bei gleicher relativer Einschaltdauer des Kühlaggregats bewirkt wird.

5. Verfahren nach Anspruch 1, **dadurch gekennzeichnet, dass** die relative Einschaltdauer des Kühlaggregats verlängert wird, wenn die Tiefkühltemperatur und die Hauptkühltemperatur eine Istwertabweichung zu einer höheren Tiefkühltemperatur bzw. zu einer höheren Hauptkühltemperatur aufweise.

6. Verfahren nach Anspruch 1, **dadurch gekennzeichnet, dass** die relative Einschaltdauer des Kühlaggregats verkürzt wird, wenn die Tiefkühltemperatur und die Hauptkühltemperatur eine Istwertabweichung zu einer niedrigeren Tiefkühltemperatur bzw. zu einer niedrigeren Hauptkühltemperatur aufweisen.

7. Verfahren nach Anspruch 5 oder 6, **dadurch gekennzeichnet, dass** die Verkürzung der relativen Einschaltdauer durch einen vom Regler eingestellten niedrigeren Wert der Ist-Tiefkühl- und/oder der Hauptkühltemperatur und die Verlängerung der relativen Einschaltdauer durch einen vom Regler eingestellten höheren Wert der Ist-Tiefkühl-und/oder Hauptkühltemperatur bewirkt wird.

8. Regeleinrichtung zur Regelung der Temperatur in einem Kühlgerät mit einem einzigen Kühlaggregat und einem einzigen Kühlkreislauf, der eine Hauptküllzone mit einer höheren Hauptkühltemperatur und eine Tiefkühlzone mit einer niedrigeren Tiefkühltemperatur nach Art einer Reihenschaltung miteinander verbindet, und mit einem Regler zur Konstanthaltung der Hauptkühltemperatur durch ein Verfahren nach einem der Ansprüche 1 bis 7.

9. Regeleinrichtung nach Anspruch 8, **dadurch gekennzeichnet, dass** der Regler ein Fuzzy-Regler ist.

10. Kühlgerät mit einer Regeleinrichtung nach Anspruch 8 oder 9.

## Claims

1. Method of regulating the temperature in a refrigeration appliance having
- a single refrigeration unit and a single refrigeration circuit, which joins together a main refrigeration zone with a higher main refrigeration temperature and a sub-zero refrigeration zone with a lower sub-zero temperature in the manner of a series circuit, and having
- means for keeping the main refrigeration temperature constant
**characterised in that** the cycle duration and the relative switch-on duration of the refrigeration appliance are varied independently according to the deviation of the sub-zero temperature and/or of the main refrigeration temperature from a setpoint value.

2. Method according to claim 1, **characterised in that** the cycle duration of the refrigeration appliance is shortened if the sub-zero temperature has an actual value deviation from a lower sub-zero temperature and the main refrigeration temperature is in the setpoint value range or above.

3. Method according to claim 1, **characterised in that** the duration of the cycle of the refrigeration appliance is extended if the sub-zero refrigeration temperature has an actual value deviation from a higher sub-zero temperature and the main refrigeration temperature is within the setpoint value range or below.

4. Method according to claim 2 or 3, **characterised in that** the extension of the cycle duration is effected by an enlargement and its shortening by reducing the switch-on and switch-off duration with an equal relative switch-on duration of the refrigeration unit.

5. Method according to claim 1, **characterised in that** the relative switch-on duration of the refrigeration unit is extended if the sub-zero temperature and the main refrigeration temperature have an actual value deviation from a higher sub-zero temperature or from a higher main refrigeration temperature.

6. Method according to claim 1, **characterised in that** the relative switch-on duration of the refrigeration unit is shortened if the sub-zero temperature and the main refrigeration temperature have an actual value deviation from a lower sub-zero temperature or from a lower main refrigeration temperature.

7. Method according to claim 5 or 6, **characterised in that** the shortening of the relative switch-on duration is effected by a lower value of the actual sub-zero and/or of the main refrigeration temperature set by the regulator and the extension of the relative switch-on duration is effected by a higher value of the actual sub-zero and/or main refrigeration temperature set by the regulator.

8. Regulation device for regulating the temperature in a refrigeration appliance having a single refrigeration unit and a single refrigeration circuit, which joins together a main refrigeration zone with a higher main refrigeration temperature and a sub-zero refrigeration zone having a lower sub-zero temperature in the manner of a series circuit, and having a regulator for keeping the main refrigeration temperature constant by a method according to one of claims 1 to 7.

9. Regulation device according to claim 8, **characterised in that** the regulator is a fuzzy regulator.

10. Refrigeration appliance having a regulation device according to claim 8 or 9.

## Revendications

1. Procédé de réglage de la température, dans un appareil frigorifique comprenant
- un groupe frigorifique unique et un circuit de réfrigération unique, qui relie une zone de réfrigération principale à une température de réfrigération principale plus élevée et une zone de congélation à une température de congélation plus basse à la manière d'un montage en série et
- un moyen pour le maintien constant de la température de réfrigération principale,
**caractérisé en ce que** la durée du cycle et la durée en service relative du groupe frigorifique peuvent être amenées à varier sensiblement indépendamment l'une de l'autre en fonction d'un écart de valeur de consigne de la température de congélation et/ou de la température de réfrigération principale.

2. Procédé selon la revendication 1, **caractérisé en ce que** la durée du cycle du groupe frigorifique est raccourcie lorsque la température de congélation présente un écart de valeur réelle à une température de congélation plus basse et que la température de réfrigération principale se situe dans la plage de valeurs de consigne ou au-dessus de celle-ci.

3. Procédé selon la revendication 1, **caractérisé en ce que** la durée du cycle du groupe frigorifique est prolongée lorsque la température de congélation présente un écart de valeur réelle relativement à une température de congélation plus élevée et que la température de réfrigération principale se situe dans la plage de valeurs de consigne ou en dessous de celle-ci.

4. Procédé selon la revendication 2 ou 3, **caractérisé en ce que** le prolongement de la durée du cycle est provoqué par un agrandissement, et son raccourcissement par une diminution de la durée en et hors service pour une même durée en service relative du groupe frigorifique.

5. Procédé selon la revendication 1, **caractérisé en ce que** la durée en service relative du groupe frigorifique est prolongée lorsque la température de congélation et la température de réfrigération principale présentent un écart de valeur réelle à une température de congélation plus élevée respectivement à une température de réfrigération principale plus élevée.

6. Procédé selon la revendication 1, **caractérisé en ce que** la durée en service relative du groupe frigorifique est raccourcie lorsque la température de congélation et la température de réfrigération principale présentent un écart de valeur réelle à une température de congélation plus basse respectivement à une température de réfrigération principale plus basse.

7. Procédé selon la revendication 5 ou 6, **caractérisé en ce que** le raccourcissement de la durée en service relative est provoqué par une valeur plus basse réglée par le régulateur de la température de congélation et/ou de réfrigération principale réelle, et le prolongement de la durée en service relative par une valeur plus élevée réglée par le régulateur de la température de congélation et/ou de réfrigération principale réelle.

8. Installation de réglage pour régler la température dans un appareil frigorifique avec un groupe frigorifique unique et un circuit frigorifique unique qui relie une zone de réfrigération principale à une température de réfrigération principale plus élevée et une zone de congélation à une température de congélation plus basse à la manière d'un montage en série, et avec un régulateur pour le maintien constant de la température de réfrigération principale, par un procédé selon l'une des revendications 1 à 7.

9. Installation de réglage selon la revendication 8, **caractérisée en ce que** le régulateur est un régulateur flou.

10. Appareil frigorifique avec une installation de réglage selon la revendication 8 ou 9.
